# EUROPEAN PATENT APPLICATION

(11) **EP 4 600 213 A1**
(43) Date of publication of application: **13.08.2025**
(21) Application number: 24217718.6
(22) Date of filing: 05.12.2024
(51) Int. Cl.: C01C 1/04, B01J 8/02, B01J 19/12

(54) **AMMONIA SYNTHESIS SYSTEM AND ITS OPERATION METHOD**

(30) Priority: 08.02.2024 KR 20240019366
(71) Applicant: SK Innovation Co., Ltd., Seoul 03188 (KR)
(72) Inventor: SONG, Da Eun, 34124 Daejeon (KR); LEE, Jun Young, 34124 Daejeon (KR); IM, Ju Hwan, 34124 Daejeon (KR); JEONG, Jae Hun, 34124 Daejeon (KR); KIM, Sun Kug, 34124 Daejeon (KR); KIM, Ye Jin, 34124 Daejeon (KR)
(74) Representative: Prüfer & Partner mbB Patentanwälte · Rechtsanwälte

(57) **Abstract**

Anmmonia synthesis system including an ammonia synthesis reactor; two or more catalyst beds included in the ammonia synthesis reactor; one or more backflow prevention plates disposed downstream from each of the catalyst beds, optionally except for the catalyst bed disposed at the lowest of the two or more catalyst beds, and preventing a gas backflow; distribution devices disposed upstream from each of the two or more catalyst beds and distributing gas to the catalyst bed; hydrogen gas supply lines arranged to supply hydrogen gas to each of the distribution devices; and at least one microwave heating device for emitting microwaves to each of the two or more catalyst beds, and further including a nitrogen gas supply line disposed to supply nitrogen gas to a top-most distribution device of the distribution devices.

## Description

### TECHNICAL FIELD

The present disclosure generally relate to an ammonia synthesis system, and to a method for synthesizing ammonia in an ammonia synthesis system.

### BACKGROUND

There is an increasing need for renewable energy to achieve a greenhouse gas reduction to cope with climate change and depletion of oil resources. However, areas that meet an appropriate condition for renewable energy production are scattered, and it is thus essential to find ways for storing and transporting renewable energy. For example, renewable energy, which is abundant in the equatorial and southern hemisphere areas, is required to be transported to the northern hemisphere where renewable energy is highly demanded.

In addition, renewable energy has temporal variability, thus making an electric storage device essential. Ammonia is spotlighted as an energy carrier to solve the problems occurring from the area ubiquity and temporal variability of renewable energy. In particular, ammonia may be liquefied at room temperature and at pressure of 8.5 atmospheres or lower, and thus be stored and transported more easily than hydrogen. Therefore, as an alternative to solve the problems occurring from the area ubiquity and temporal variability of renewable energy, it is necessary to focus on synthesizing ammonia by using hydrogen and nitrogen, which are produced using electricity produced from renewable energy, as its raw materials.

Hydrogen, one of the main raw materials for the ammonia synthesis, may be produced by a water electrolyzer powered by renewable energy such as solar or wind energy, although these renewable energy sources have temporal variability. It is in this context that the embodiments of the present disclosure arise.

### SUMMARY

One embodiment of the present disclosure is directed to providing an ammonia synthesis system which may cope with a change and/or non-uniformity in a flow rate of raw material and in particular of hydrogen, that occurs during a production cycle.

Another embodiment of the present disclosure is directed to providing an ammonia synthesis system which may maintain a uniform flow rate distribution at the front end of a catalyst bed included in an ammonia synthesis reactor even when a flow rate of a raw material, such as hydrogen, fed into the ammonia synthesis system is decreased or increased, in particular if the mentioned decrease or increased in the flow rate is substantial.

Still another embodiment of the present disclosure is directed to providing an ammonia synthesis system which may improve an ammonia synthesis yield by enabling a temperature in the central and in outer parts of a catalyst bed to be uniform, in particular at the beginning of its operation.

One embodiment of the present disclosure is directed to providing an ammonia synthesis system which may improve an ammonia synthesis yield at the beginning of its operation by preheating a catalyst bed at the beginning of its operation.

Another embodiment of the present disclosure is directed to providing an ammonia synthesis system which may save energy by optimizing an amount of energy required by the system during its operation.

Another embodiment of the present disclosure is directed to providing an ammonia synthesis system which may prolong a catalyst replacement cycle by uniformly using each catalyst bed during the operation.

Another embodiment of the present disclosure is directed to providing an ammonia synthesis system which may cope in real time with the change in the flow rate that occurs during the production cycle.

One embodiment of the present disclosure is directed to providing an ammonia synthesis system which may maintain catalytic activity for a long time by preventing a catalyst from being exposed to a rapid temperature change.

In one embodiment, provided is an ammonia synthesis system including an ammonia synthesis reactor; two or more catalyst beds included in the ammonia synthesis reactor; one or more backflow prevention plates, disposed downstream from each of the catalyst beds, optionally except for the catalyst bed disposed at the lowest of the two or more catalyst beds; distribution devices disposed upstream from each of the two or more catalyst beds and distributing gas to the catalyst bed; hydrogen gas supply lines arranged to supply hydrogen gas to each of the distribution devices; and at least one microwave heating device for emitting microwaves to each of the two or more catalyst beds, and further including a nitrogen gas supply line disposed to supply nitrogen gas to a top-most distribution device of the distribution devices.

The system may further include distribution plates each disposed between the catalyst bed and the distribution device.

The system may further include a plurality of gas flow pipes which are fixed to a lower surface of the distribution plate and through which the gas flows.

The gas flow pipe may have a bottom surface and a side surface connecting the bottom surface with the distribution plate, a plurality of upper openings may be formed in a side surface of an upper part of the gas flow pipe spaced apart from each other along a circumference of the pipe, a plurality of middle openings may be formed in a side surface of a middle part of the gas flow pipe spaced apart from each other along the circumference, a plurality of lower openings may be formed in a side surface of a lower part of the gas flow pipe spaced apart from each other along the circumference, and the gas flow pipe may include a cover surrounding at least some regions of the side surface of the gas flow pipe to provide a space for a fluid flowing out of the side surface of the gas flow pipe after passing through the upper opening to be guided toward the middle opening.

The mixed gas flow pipe may further include a separator plate dividing the upper and middle parts of the mixed gas flow pipe from each other.

Each of the hydrogen gas supply lines and the nitrogen gas supply line may independently include a flow regulating device.

Each of the backflow prevention plates may include a plurality of openings, and each of the plurality of openings included in each of the backflow prevention plates may have a backflow prevention cap selectively opened based on a flow direction of the gas.

The backflow prevention cap may be coupled to a hinge disposed at a position on each circumference part of the plurality of openings included in each of the backflow prevention plates.

A coupling part of the hinge that is coupled to the hinge may include a spring to apply an elastic force in a direction in which the backflow prevention cap closes.

At least one of the distribution devices may have a disk shape or a toroidal shape.

The system may further include at least two heat exchangers disposed downstream from each of the two or more catalyst beds to remove heat from effluents of the catalyst beds.

In another embodiment, provided is a method for synthesizing ammonia using the ammonia synthesis system disclosed herein.

Ammonia may be synthesized in the ammonia synthesis system or in the method at pressures ranging from 1 to 300 bar.

Ammonia may be synthesized in the ammonia synthesis system or in the method at temperatures ranging from 200 to 700°C.

In another embodiment, provided is an operation method and/or a sysnthesis method of an ammonia synthesis system, the method including the following modes selectively performed by the ammonia synthesis system as described above: a nitrogen gas purge mode in which nitrogen is supplied through a nitrogen gas supply line and hydrogen is not supplied through a hydrogen gas supply line; and an ammonia synthesis mode in which nitrogen is supplied through the nitrogen gas supply line and hydrogen is supplied through the hydrogen gas supply line.

Optionally, a step of preheating of at least one of catalyst beds of the ammonia synthesis system may be carried out with at least one microwave heating device, preferably wherein the preheating is carried out prior to the ammonia synthesis mode. Here, it is possible by the preheating step to beneficially improve ammonia synthesis yield at a beginning of the ammonia synthesis mode (improvement compared to lacking a preheating step).

The method may further comprise, in the ammonia synthesis mode, feeding the nitrogen and the hydrogen individually to the ammonia synthesis reactor.

The method, wherein feeding the nitrogen and the hydrogen individually to the ammonia synthesis reactor comprises selectively controlling the feeding of the nitrogen and the hydrogen, and thereby accomdating changes in hydrogen flow rates to the ammonia synthesis reactor due to variances in a renewable source of energy used to generate the hydrogen.

The method, wherein, for hydrogen generated from the renewable energy source providing relatively low, medium, and high hydrogen flow rates, at a hydrogen flow rate generated by the renewable energy source that is less than the medium hydrogen flow rate, supplying the hydrogen only through a lowest hydrogen gas supply line, of the hydrogen gas supply lines, adjacent the lowest catalyst bed.

The method, wherein, for hydrogen generated from a renewable energy source providing relatively low, medium, and high hydrogen flow rates, at a hydrogen flow rate generated by the renewable energy source that is less than the high hydrogen flow rate and more than the low hydrogen flow rate, supplying the hydrogen through the hydrogen gas supply lines except for a highest hydrogen gas supply line, of the hydrogen gas supply lines, adjacent a highest catalyst bed of the two or more catalyst beds.

The method, wherein, prior to the ammonia synthesis mode, preheating at least one of the catalst beds with the at least one microwave heating device.

The method, wherein the preheating improves ammonia synthesis yield at a beginning of the ammonia synthesis mode.

Other features and aspects will be apparent from the following detailed description, the drawings, and the claims.

### BRIEF DESCRIPTION OF THE DRAWINGS

FIG. 1 is a schematic view showing an ammonia synthesis system according to one embodiment of the present disclosure.
FIG. 2 is a schematic view showing an ammonia synthesis system according to another embodiment of the present disclosure.
FIG. 3 is a perspective view showing a distribution plate and a gas flow pipe according to another embodiment of the present disclosure.
FIG. 4 is a perspective view showing the inside of the gas flow pipe according to another embodiment of the present disclosure.
FIG. 5 is a perspective view showing the inside of a gas flow pipe according to another embodiment of the present disclosure.
FIG. 6 is a view showing a state where a backflow prevention cap of a backflow prevention plate is closed according to another embodiment of the present disclosure.
FIG. 7 is a view showing a state where the backflow prevention cap of the backflow prevention plate is opened according to another embodiment of the present disclosure.

### DETAILED DESCRIPTION

Various advantages and features of the present disclosure and methods for accomplishing the same are apparent from embodiments described in detail below. However, the embodiments of the present disclosure are not limited to the embodiments disclosed below, and may be implemented in various different forms. These embodiments are provided to allow those skilled in the art to appreciate the scope of the present disclosure.

Unless defined otherwise, all terms (including technical and scientific terms) used in the specification have the same meanings as understood by those skilled in the art to which the present disclosure pertains.

A term of a singular number used in the specification may be interpreted as including its plural number unless otherwise indicated.

A numerical range used in the specification may include the lower and upper limits and all values within that range, increments logically derived from the extent and width of the defined range, all values delimited by those limits, and all possible combinations of the upper and lower limits of a numerical range delimited by different extents. The defined numerical range may also include values outside the numerical range, which may occur due to experimental errors or rounding of values unless otherwise specified in the specification.

A term "to include" in the specification is a comprehensive description that has the meaning equivalent to an expression such as "to include", "to contain", "to have", or "to be featured", and does not exclude an element, a material, or a process that is not additionally enumerated.

The terms "top-most", "upper", "middle" and "lower" generally means a spatial distribution in a longitudinal direction of the system; these terms may refer to a separation of the corresponding element in a direction of stream (downstream or upstream), regardless whether a system having a certain longitudinal shape is arranged in an upward/vertical orientation or in a horizontal orientation or in another orientation.

Unless otherwise indicated, a unit of % used in the specification may indicate % by weight.

In the specification, "A to B" indicates "A or more and B or fewer" unless otherwise specifically defined.

Renewable energy, such as solar energy or wind energy, shows temporal variability. For example, solar energy is unable to be used at night. Therefore, an ammonia synthesis system is unable to be always operated at a constant flow rate, and it is thus necessary to anticipate and handle a change in the flow rate that occurs during a production cycle.

In addition, the non-uniformity of a flow rate distribution of a catalyst bed included in an ammonia synthesis reactor may be increased when a flow rate of the raw material such as hydrogen fed into the ammonia synthesis system is decreased.

In addition, in a conventional ammonia synthesis system, a temperature deviation may occur between the central and outer parts of the catalyst bed especially at the beginning of its operation, which may reduce an ammonia synthesis yield.

Therefore, there is a need for an ammonia synthesis system which may cope with changes in flow rates that occur during the production cycle, while addressing the issues of non-uniform flow rate distribution that occurs before the catalyst bed, and reduced ammonia synthesis yield caused by the temperature deviation between the central and outer parts of the catalyst bed at the beginning of the operation.

Hereinafter, an ammonia synthesis system of the present disclosure is described in detail. However, the embodiments are only illustrative, and the present disclosure is not limited to the specific embodiments described below.

One embodiment of the present disclosure may provide an ammonia synthesis system including an ammonia synthesis reactor; two or more catalyst beds included in the ammonia synthesis reactor; a backflow prevention plate disposed downstream from each of the catalyst beds, optionally except for the catalyst bed disposed at the lowest of the two or more catalyst beds and preventing a gas backflow; a distribution device disposed upstream from each of the two or more catalyst beds and distributing gas to the catalyst bed; hydrogen gas supply lines arranged to supply hydrogen gas to each distribution device; and a microwave heating device for emitting microwaves to each of the two or more catalyst beds, and further including a nitrogen gas supply line disposed to supply nitrogen gas to the distribution device disposed at the top among the distribution devices.

In the ammonia synthesis system according to the present disclosure, nitrogen and hydrogen, which are ammonia synthesis raw materials, may be fed individually to the reactor rather than fed into the reactor as a mixed gas. When nitrogen and hydrogen are fed individually rather than fed in the form of a mixed gas, as in the ammonia synthesis system, nitrogen may be fed continuously into the reactor and hydrogen having a different flow rate based on a change in the flow rate of the produced hydrogen may be fed into the reactor, thereby permitting the ammonia synthesis system to cope in real time with changes in the flow rates that occur during a production cycle.

In addition, in the ammonia synthesis system according to one embodiment of the present disclosure, nitrogen may be continuously fed to the reactor even when hydrogen is not produced and hydrogen is not fed to the reactor to prevent a catalyst from being exposed to a rapid temperature change through a nitrogen purge, thereby maintaining catalytic activity for a long time.

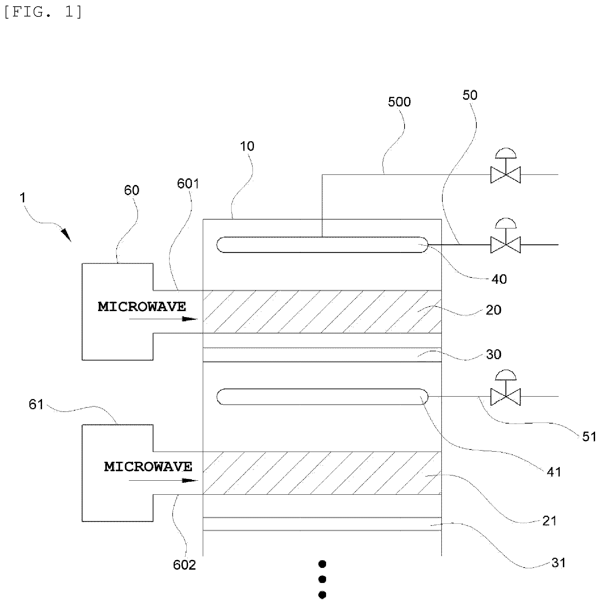

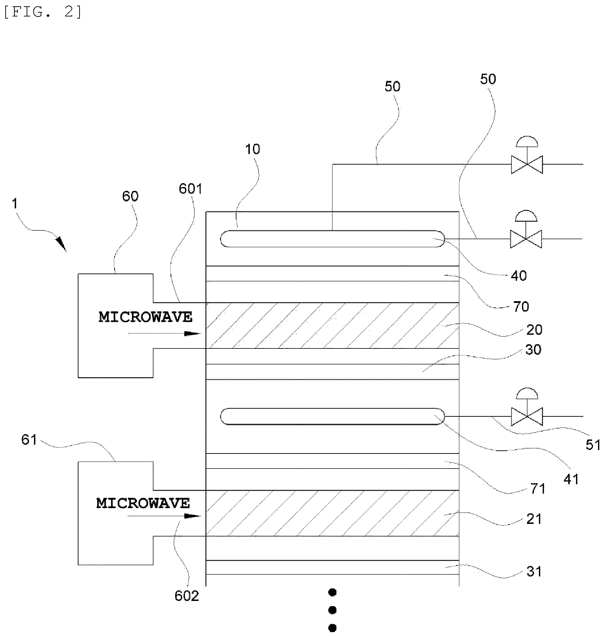

Referring to FIGS. 1 and 2, according to another embodiment of the present disclosure, provided is an ammonia synthesis system 1 including an ammonia synthesis reactor 10; two or more catalyst beds 20 and 21 included in the ammonia synthesis reactor 10; a backflow prevention plate 30 or 31 disposed downstream from each of the catalyst beds; a distribution device 40 or 41 disposed upstream from each of the two or more catalyst beds 20 and 21 and distributing the gas to the catalyst bed 20 or 21; hydrogen gas supply lines 50 and 51 arranged to supply the gas to each distribution device 40 or 41; a microwave heating device 60 or 61 for emitting the microwaves to each of the two or more catalyst beds 20 and 21; and a nitrogen gas supply line 500 disposed to supply the nitrogen gas to the distribution device disposed at the top among the distribution devices.

Hereinafter, the ammonia synthesis system including two catalyst beds may be an example of the ammonia synthesis system of the present disclosure. The ammonia synthesis system according to one embodiment of the present disclosure may include two or more, for example, three, four, five, seven, or ten catalyst beds (generally indicated in Figs. 1 and 2 by the dotted line), but the embodiments are not limited to these numbers of catalyst beds.

The ammonia synthesis system according to one embodiment of the present disclosure may cope with changes in the flow rates that occur during the production cycle by including the hydrogen gas supply line 50 or 51 to supply hydrogen gas to each of the two or more catalyst beds 20 and 21. For example, the ammonia synthesis system may be operated by feeding the hydrogen gas through the hydrogen gas supply line 50 disposed at the top for the gas to first pass through the catalyst bed 20 disposed at the top when nitrogen is continuously fed to the top of the reactor through the nitrogen gas supply line 500 and hydrogen is consumed in producing ammonia at a relatvely high flow rate. Further, the the ammonia synthesis system may be operated by feeding the hydrogen gas through the hydrogen gas supply line 51 disposed at the bottom for the gas to pass through the catalyst bed 21 disposed at the bottom rather than the catalyst bed 20 disposed at the top when the flow rate of the fed raw material is relatively low. Here, the backflow of the gas may be prevented by the backflow prevention plate 30 when the hydrogen gas is fed through the hydrogen gas supply line 51 disposed at the bottom to pass through the catalyst bed 21 disposed at the bottom.

Here, in the specification, the flow rate that can be changed during the production cycle may be classified into three categories for the sake of convenience, not limitation. The flow rate may be classified into a low flow rate, a medium flow rate, and a high flow rate. However, the change in the flow rate may be regulated to other rates . The low flow rate case may indicate a case where the flow rate is less than half (50%) of an annual average production flow rate (100%), the medium flow rate case may indicate a case where the flow rate is half (50%) or more and less than twice (200%) of the annual average production flow rate (100%), and the high flow rate case may indicate a case where the flow rate is more than twice (200%) of the annual average production flow rate (100%). The embodiments are not limited to these flowrates or classifications.

When the produced hydrogen has the low flow rate as described above, there is no need to maintain a temperature of the entire reactor because the ammonia synthesis system may be operated by feeding the hydrogen gas through the hydrogen gas supply line 51 disposed at the bottom for the gas to pass through the catalyst bed 21 disposed at the bottom. Therefore, the energy may be saved by reducing an amount of energy required by the system as needed during its operation.

In addition, the ammonia synthesis system may increase the catalyst replacement cycle by using each catalyst bed uniformly during its operation. In general, when a reaction fluid has the low flow rate, distribution performance at the top of the catalyst bed may be reduced, which may cause the catalyst disposed even at the same height to have a different reaction performance. The catalyst replacement cycle may be determined by the reaction performance at the bottom of the catalyst bed, and the replacement cycle may become shorter if the reaction performance at some regions at the bottom of the catalyst bed is lowered due to lower distribution performance caused by a reduced flow rate. However, the catalyst replacement cycle may be increased relatively uniformly using the catalyst beds if a height of the catalyst bed through which the gas passes is changed based on the change in the flow rate, in which case the distribution performance of each catalyst bed is improved, as in one embodiment of the ammonia synthesis system according to the present disclosure.

In addition, in the ammonia synthesis system according to another embodiment of the present disclosure, nitrogen may be continuously fed to the reactor even when hydrogen is not produced and hydrogen is not fed to the reactor to thus prevent the catalyst from being exposed to a rapid temperature change, thereby maintaining the catalytic activity for a long time.

The catalyst having a different weight and included in the catalyst bed may be included in each layer of the catalyst bed. For example, if the catalyst bed includes three layers, the catalyst having a larger weight may be included in the catalyst bed disposed in the middle rather than in the catalyst bed disposed at the top, and the catalyst having a larger weight may be included in the catalyst bed disposed at the bottom rather than in the catalyst bed disposed in the middle. However, this configuration is only an example, and a weight of the catalyst included in each catalyst bed may be changed based on its reaction condition and operating condition. The weight of the catalyst included in each of the catalyst beds may be changed based on the arrangement type or number of the microwave heating devices.

According to another embodiment of the present disclosure, the catalyst may include at least one or both selected from the group consisting of ruthenium (Ru) and cesium (Cs) as a catalytically active component.

According to another embodiment of the present disclosure, the catalyst may include, as a catalyst support, at least one or more selected from the group consisting of cerium oxide, lanthanum oxide, vanadium oxide, magnesium oxide, aluminum oxide, zirconium oxide, tungsten oxide, and titanium oxide, but the embodiments are not limited thereto. In detail, the catalyst may include cerium oxide as the catalyst support.

In detail, the catalyst may include at least one or both selected from the group consisting of ruthenium (Ru) and cesium (Cs) as the catalytically active component, and include cerium oxide as the catalyst support. The catalyst configured in this way may show microwave reactivity.

The ammonia synthesis system according to another embodiment of the present disclosure may include the microwave heating devices 60 and 61 to permit atemperature deviation between the central and outer parts of the catalyst bed to be made uniform at the beginning of its operation, thereby improving an ammonia synthesis yield. In detail, the microwave heating device may reduce the temperature deviations between the central and outer parts of the catalyst bed by emitting the microwaves to the catalyst bed at the beginning of the operation. In addition, the microwave heating device may improve the ammonia synthesis yield at the beginning of the operation by preheating the catalyst bed, which otherwise would not be sufficiently preheated at the beginning of the ammonia synthesis operation.

For example, when the fed hydrogen gas has the low flow rate, the ammonia synthesis system may be operated for the gas to pass through the catalyst bed 21 disposed at the bottom rather than the catalyst bed 20 disposed at the top. Here, the hydrogen gas may not be fed into the catalyst bed 20 disposed at the top, and an ammonia synthesis reaction, which is an exothermic reaction, may not be produced, thus decreasing a temperature of the catalyst bed 20 disposed at the top over time. If the catalyst bed 20 disposed at the top is used again after this decrease, the ammonia synthesis efficiency may be lower because the temperature of the catalyst bed 20 disposed at the top is decreased. Here, the catalyst bed 20 disposed at the top, which has the lower temperature, may be preheated by the microwaves emitted by the microwave heating device, thus achieving excellent ammonia synthesis efficiency even when the catalyst bed is used again for the operation.

One or more, two or more, three or more, four or more, five or more, or eight or more microwave heating devices may be installed on each catalyst bed, and the number of microwave heating devices is not limited thereto. The number of the microwave heating devices may be increased based on a size of the reactor, and an installation location of the microwave heating device may be adjusted for efficient microwave emission.

The ammonia synthesis system may further include microwave guides 601 and 602. The microwave guides may enable the microwaves emitted by the microwave heating device to reach the catalyst bed more efficiently. The shape or installation location of the guides may be changed based on a microwave waveform.

In another embodiment according to the present disclosure, the number of catalyst beds may be two or more, three or more, four or more, five or more, six or more, seven or more, ten or more, twenty or fewer, ten or fewer, eight or fewer, seven or fewer, six or fewer, five or fewer, four or fewer, three or fewer, two or fewer, or a value between these values. The number of catalyst beds and the number of distribution devices may be the same as each other.

Hydrogen may be produced by a device powered by renewable energy. In detail, hydrogen may be produced by a water electrolyzer powered using renewable energy.

Renewable energy may include at least one or more selected from the group consisting of solar energy, photovoltaic energy, bioenergy, wind energy, hydroelectric energy, geothermal energy, ocean energy, and waste energy. Renewable energy shows temporal variability. For example, the solar energy is unable to be used at night. Therefore, when hydrogen is produced using the device powered by renewable energy, the ammonia synthesis system is unable to be always operated at the constant flow rate. That is, there is a need for the ammonia synthesis system which may cope with the change in the flow rate that occurs during the production cycle due to the temporal variability of renewable energy.

In addition, the hydrogen gas supplied through the hydrogen gas supply line 50 or 51 may have a low temperature. Therefore, the gas supplied through the hydrogen gas supply line 50 or 51 may function as cooling gas, and may also function as a way of cooling the gas flowing in the ammonia synthesis system. For example, the hydrogen gas having the low temperature may be used as the cooling mechanism to cool the reactor.

The ammonia synthesis system according to another embodiment of the present disclosure may further include distribution plates 70 and 71 each disposed between the catalyst bed 20 or 21 and the distribution device 40 or 41.

In addition, the ammonia synthesis system according to one embodiment of the present disclosure may further include a plurality of gas flow pipes 720 which are fixed to a lower surface 72 of the distribution plate 70 or 71 and through which the gas flows.

The ammonia synthesis system may further include the distribution plate and the gas flow pipe, thereby maintaining an uniform flow rate distribution before the catalyst bed included in the ammonia synthesis reactor even when the flow rate of the fed raw material such as hydrogen is reduced.

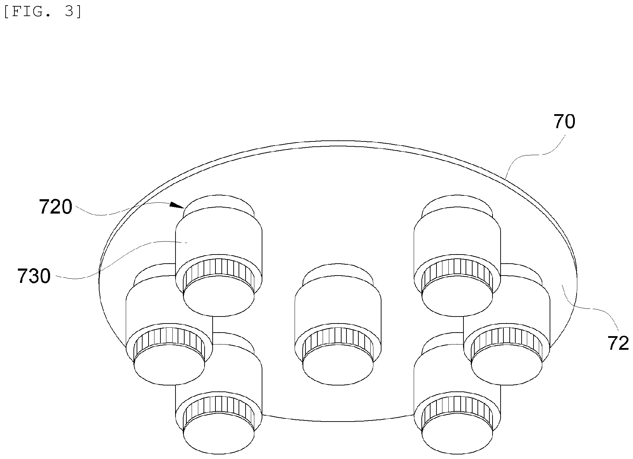

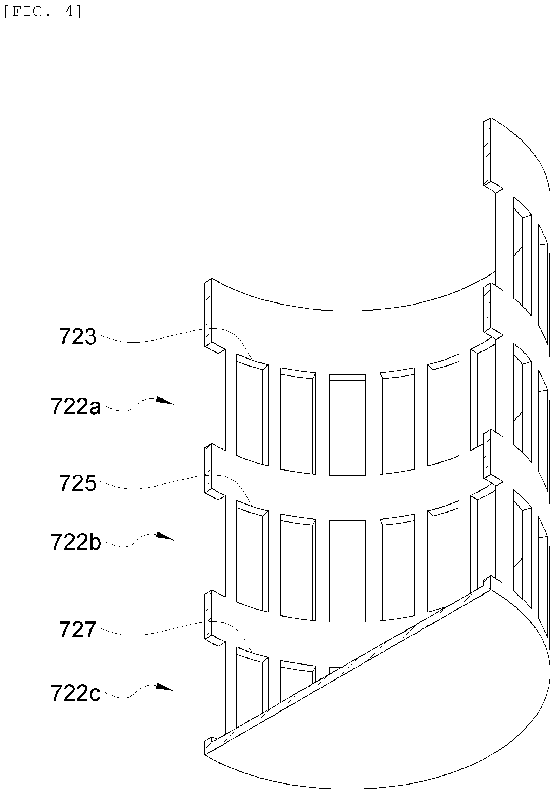

Referring to FIGS. 3 and 4, the gas flow pipe 720 may have a bottom surface and a side surface 722 connecting the bottom surface with the distribution plate.

A plurality of upper openings 723 may be formed in a side surface of an upper part 722a of the gas flow pipe 720 spaced apart from each other along a circumference of the pipe 720, a plurality of middle openings 725 may be formed in a side surface of a middle part 722b of the gas flow pipe 720 spaced apart from each other along the circumference, and a plurality of lower openings 727 may be formed in a side surface of a lower part 722c of the gas flow pipe 720 spaced apart from each other along the circumference. A flow of the gas may be formed through the upper opening 723, the middle opening 725, and the lower opening 727. The gas flow pipe 720 may include a cover 730 surrounding at least some regions of the side surface of the gas flow pipe 720 to provide a space for the fluid flowing out of the side surface of the gas flow pipe 720 after passing through the upper opening 723 to be guided toward the middle opening 725. The cover 730 may surround at least one selected from the group consisting of the upper and middle parts of the side surface of the gas flow pipe 720.

The cover 730 may cause the fluid flowing out of the side surface of the gas flow pipe 720 after passing through the upper opening 723 to be guided toward the middle opening 725. This configuration may form a flow in which the fluid is moved to the outside of the side surface of the gas flow pipe 720 and then moved back to the inside of the side surface. Through the flow formed in this way, the fluids may be more smoothly mixed with each other.

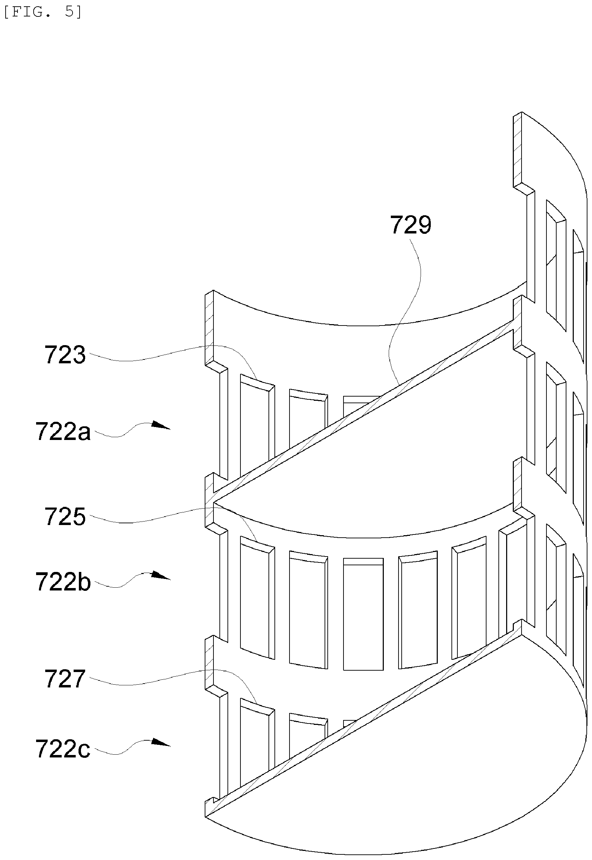

Referring to FIG. 5, the gas flow pipe 720 may further include a separator plate 729 dividing the upper and middle parts of the gas flow pipe 720 from each other. The separator plate 729 may completely separate the upper and middle parts of the gas flow pipe 720 from each other to prevent the movement of the fluid. Therefore, the fluid flowing into the upper part of the gas flow pipe 720 may by the separator plate 729 flow out through the upper opening 723 into the space between the gas flow pipe 720 and the cover 730 rather than descending directly to the middle part. The fluid in the space may then flow into the gas flow pipe through the middle opening 725, descend downwards, and flow out of the gas flow pipe 720 through the lower opening 727. As described above, the fluid may form the flow in which the fluid flows out of the gas flow pipe 720, flows back into the inside of the pipe, and flows out of the pipe again, thereby mixing the fluids more smoothly, and maintaining the uniform flow rate distribution before the catalyst bed.

The ammonia synthesis system according to another embodiment of the present disclosure may further include the nitrogen gas supply line 500 disposed to supply the nitrogen gas to the distribution device disposed at the top among the distribution devices. The nitrogen gas supply lines may be arranged independently to each of the distribution device not disposed at the top as well as the distribution device disposed at the top.

In the ammonia synthesis system according to the present disclosure, nitrogen and hydrogen, which are the ammonia synthesis raw materials, may be fed individually to the reactor rather than fed into the reactor as the mixed gas. When nitrogen and hydrogen are fed individually through the nitrogen gas supply line and the hydrogen gas supply line rather than fed in the form of the mixed gas, as in the ammonia synthesis system, nitrogen may be fed continuously into the reactor through the nitrogen gas supply line and hydrogen having the different flow rate based on the change in the flow rate of produced hydrogen may be fed into the reactor, thereby permitting the ammonia synthesis system to cope in real time immediately with changes in the flow rate that occur during the production cycle.

In addition, in the ammonia synthesis system according to one embodiment of the present disclosure, the nitrogen gas may be continuously fed to the reactor through the nitrogen gas supply line even when hydrogen is not produced and hydrogen is not fed to the reactor to thus prevent the catalyst from being exposed to the rapid temperature change through the nitrogen purge, thereby maintaining the catalytic activity for a long time.

In another embodiment according to the present disclosure, each of the hydrogen gas supply lines 50 and 51 and the nitrogen gas supply line 500 may independently include a flow regulating device. The flow regulating device may permit the flow rate of the gas to be controlled independently in each of the gas supply lines. In detail, the flow regulating device may independently regulate the flow rate of the gas flowing through each of the gas supply lines for the flow rate of the gas entering the distribution device to be maintained within a desired flow rate range. The flow regulating device may be a flow regulating valve.

In another embodiment according to the present disclosure, each hydrogen gas supply line 50 or 51 and each nitrogen gas supply line 500 may respectively branch from one main hydrogen and one main nitrogen gas supply line, or may branch from a mixed gas supply line of hydrogen and nitrogen, and separately supply hydrogen and nitrogen. Alternatively, each of the hydrogen gas supply lines 50 and 51 and the nitrogen gas supply line 500 may receive gas including at least one gas or both gases selected from the group consisting of nitrogen and hydrogen.

In another embodiment according to the present disclosure, each of the backflow prevention plates 30 and 31 may include a plurality of openings 302, and each of the plurality of openings 302 included in each of the backflow prevention plates 30 and 31 may have a backflow prevention cap 303 selectively opened based on a flow direction of the gas. The ammonia synthesis system according to one embodiment of the present disclosure may include the backflow prevention plate(s) 30 or 31 having the backflow prevention cap 303, thereby preventing the backflow of the gas even when the gas is fed through the hydrogen gas supply line 51 disposed at the bottom to pass through the catalyst bed 21 disposed at the bottom. In addition, the system may be implemented to prevent the backflow of the gas as described above to save energy by reducing the amount of energy required by the system as needed during its operation, and increase the catalyst replacement cycle by using each catalyst bed uniformly.

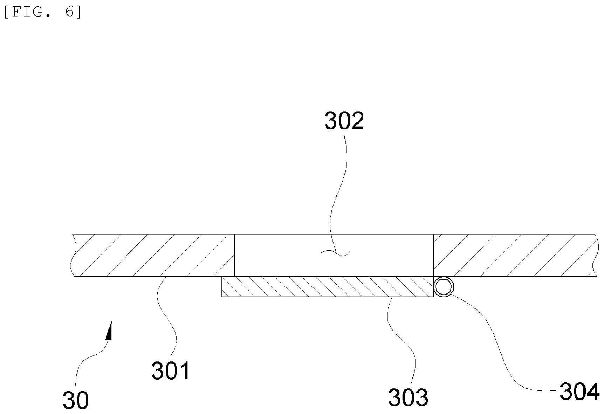

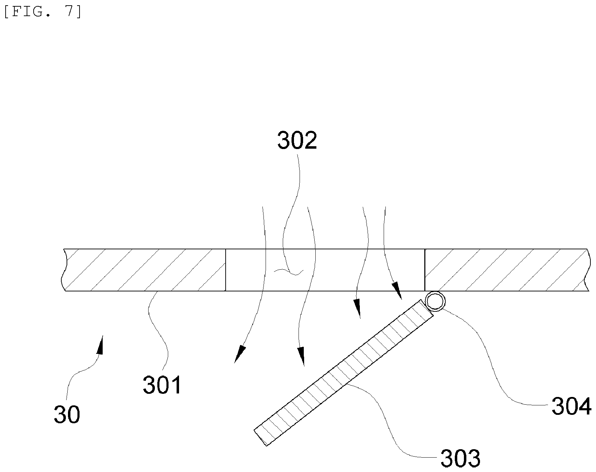

Referring to FIGS. 6 and 7, the backflow prevention cap 303 may be coupled to a hinge 304 disposed at a position on each circumference part of the plurality of openings 302 included in each of the backflow prevention plates 30 and 31. FIG. 7 shows a state where the backflow prevention cap 303, which is coupled to the hinge 304, is opened. When the gas flows from the upstream to downstream of the backflow prevention plate 30 or 31, the backflow prevention cap 303 may be maintained to be opened, and the gas may thus flow normally. FIG. 6 shows a state where the backflow prevention cap 303, which is coupled to the hinge 304, is closed. When the gas is to flow from the downstream to upstream of the backflow prevention plate 30 or 31, the backflow prevention cap 303 will be closed because of the flow of the gas flowing from the downstream to the upstream. By this principle, the backflow prevention plate 30 or 31 according to one embodiment of the present disclosure may prevent the backflow of the gas.

In another embodiment according to the present disclosure, a coupling part of the hinge 304 that is coupled to the hinge 304 may include a spring to apply an elastic force in a direction in which the backflow prevention cap 303 approaches the distribution plate.

In another embodiment according to the present disclosure, the distribution device 40 or 41 may have a disk shape or a toroidal shape, but the embodiments are not limited thereto, and may use a conventional gas distribution device.

The ammonia synthesis system according to one embodiment of the present disclosure may further include the nitrogen gas supply line 500 disposed to supply the nitrogen gas to the distribution device disposed at the top among the distribution devices. One or more selected from the group consisting of the nitrogen gas supply line for supplying the nitrogen gas and the hydrogen gas supply line for supplying the hydrogen gas may be arranged not only for the distribution device disposed at the top among the distribution devices but also for each of the distribution devices not disposed at the top. The nitrogen gas supply line and the hydrogen gas supply line may be arranged for each distribution device.

In the ammonia synthesis system according to another embodiment of the present disclosure, ammonia may be synthesized at pressures ranging from 1 to 500 bar or 10 to 300 bar.

In addition, in the ammonia synthesis system according to another embodiment of the present disclosure, ammonia may be synthesized at temperatures ranging from 100 to 800°C or 200 to 700°C.

The ammonia synthesis system according to another embodiment of the present disclosure may further include a heat exchanger disposed downstream from each of the two or more catalyst beds to remove heat from an effluent of the catalyst bed. The heat exchanger may surround the catalyst bed or its surroundings. The ammonia synthesis system according to the present disclosure may include an additional heat removal mechanism other than the supply of the cooling gas by further including the heat exchanger. This configuration may permit the flexible operation of the ammonia synthesis system.

In addition, an embodiment of the present disclosure may provide an operation method of an ammonia synthesis system. The same description may be applied to a content overlapping a content of the ammonia synthesis system.

Another embodiment of the present disclosure may provide the operation method of an ammonia synthesis system, the method including the following modes selectively performed by the ammonia synthesis system described above: a nitrogen gas purge mode in which nitrogen is supplied through the nitrogen gas supply line and hydrogen is not supplied through the hydrogen gas supply line; and an ammonia synthesis mode in which nitrogen is supplied through the nitrogen gas supply line and hydrogen is supplied through the hydrogen gas supply line.

In the ammonia synthesis system according to one embodiment of the present disclosure, nitrogen and hydrogen, which are the ammonia synthesis raw materials, may be fed individually to the reactor rather than fed into the reactor as the mixed gas. Therefore, the following modes may be selectively performed by the ammonia synthesis system: the nitrogen gas purge mode in which nitrogen is supplied through the nitrogen gas supply line and hydrogen is not supplied through the hydrogen gas supply line; and the ammonia synthesis mode in which nitrogen is supplied through the nitrogen gas supply line and hydrogen is supplied through the hydrogen gas supply line. That is, when hydrogen is not produced and hydrogen is not fed to the reactor, the system may be operated in the nitrogen gas purge mode to prevent the catalyst from being exposed to the rapid temperature change, thereby maintaining the catalytic activity for a long time. When hydrogen is produced and fed to the reactor, the system may be operated in the ammonia synthesis mode to perform the ammonia synthesis. According to the operation method of the ammonia synthesis system, nitrogen and hydrogen may be individually fed to the reactor, and the system may thus selectively and immediately select and perform the nitrogen gas purge mode or the ammonia synthesis mode in real time, and thus immediately and rapidly cope with changes in the flow rate that occurs during the production cycle.

According to the operation method of the ammonia synthesis system, in the ammonia synthesis mode, for example, when the flow rate of hydrogen is less than half (50%) of the annual average hydrogen production flow rate (100%) (the low flow rate case), the system may be operated by supplying hydrogen through the hydrogen gas supply line disposed at the lowest of the hydrogen gas supply lines.

In addition, according to the operation method of the ammonia synthesis system, in the ammonia synthesis mode, for example, when the flow rate of hydrogen is more than half (50%) and less than twice (200%) of the annual average hydrogen production flow rate (100%) (the medium flow rate case), the system may be operated by supplying hydrogen through the hydrogen gas supply line except for the hydrogen gas supply line disposed at the top among the hydrogen gas supply lines.

When the hydrogen gas is fed as in the operation method of the ammonia synthesis system, nitrogen may be fed continuously into the reactor and hydrogen having the different flow rate based on the change in the flow rate of produced hydrogen may be fed into the reactor to use the different catalyst bed, thereby permitting the ammonia synthesis system to cope in real time immediately with changes in the flow rate that occur during the production cycle and maintain the catalytic activity for a long time.

As set forth above, the ammonia synthesis system according to one embodiment of the present disclosure may cope with changes in the flow rate that occur during the production cycle.

The ammonia synthesis system according to another embodiment of the present disclosure may maintain the uniform flow rate distribution before the catalyst bed included in the ammonia synthesis reactor even when the flow rate of the raw material, such as hydrogen, fed into the ammonia synthesis system is decreased.

The ammonia synthesis system according to still another embodiment of the present disclosure may improve the ammonia synthesis yield by enabling the temperature deviation between the central and outer parts of the catalyst bed to be uniform at the beginning of its operation.

The ammonia synthesis system according to another embodiment of the present disclosure may improve the ammonia synthesis yield at the beginning of its operation by preheating the catalyst bed at the beginning of ammonia synthesis operation.

The ammonia synthesis system according to one embodiment of the present disclosure may save energy by reducing the amount of energy required by the system during its operation.

The ammonia synthesis system according to another embodiment of the present disclosure may increase the catalyst replacement cycle by uniformly using each catalyst bed during the operation.

The ammonia synthesis system according to another embodiment of the present disclosure may cope in real time with changes in the flow rate that occur during the production cycle.

The ammonia synthesis system according to another embodiment of the present disclosure may maintain the catalytic activity for a long time by preventing the catalyst from being exposed to the rapid temperature change.

The ammonia synthesis system according to another embodiment of the present disclosure may synthesize ammonia in an eco-friendly manner.

The embodiments described above are only an example to which a principle of the present disclosure is applied, and may further include other embodiments within the scope of the present disclosure. Furthermore, the embodiments may be combined to form additional embodiments.

## Claims

1. An ammonia synthesis system comprising:
an ammonia synthesis reactor (10);
two or more catalyst beds (20, 21) included in the ammonia synthesis reactor (10);
one or more backflow prevention plates (30, 31), disposed downstream from each of the catalyst beds (20, 21), optionally except for the catalyst bed disposed at the lowest of the two or more catalyst beds, and preventing a gas backflow;
distribution devices disposed upstream from each of the two or more catalyst beds (20, 21) and distributing gas to the catalyst bed (20, 21);
hydrogen gas supply lines (50, 51) arranged to supply hydrogen gas to each of the distribution devices; and
at least one microwave heating device for emitting microwaves to each of the two or more catalyst beds (20, 21), and
further comprising a nitrogen gas supply line (500) disposed to supply nitrogen gas to a top-most distribution device of the distribution devices.

2. The system of claim 1, further comprising distribution plates (70, 71) each disposed between the catalyst bed (20, 21) and one of the distribution devices, optionally further comprising a plurality of gas flow pipes (720) which are fixed to a lower surface of the distribution plate (70, 71) and through which the gas flows.

3. The system of claim 2, wherein:
the gas flow pipe (720) has a bottom surface and a side surface (722) connecting the bottom surface with the distribution plate (70, 71),
a plurality of upper openings (723) are formed in a side surface (722) of an upper part (722a) of the gas flow pipe (720) spaced apart from each other along a circumference of the pipe,
a plurality of middle openings (725) are formed in a side surface (722) of a middle part (722b) of the gas flow pipe (720) spaced apart from each other along the circumference,
a plurality of lower openings (727) are formed in a side surface (722) of a lower part of the gas flow pipe (720) spaced apart from each other along the circumference,
optionally the gas flow pipe (720) includes a side cover (730) surrounding at least some regions of the side surface (722) of the gas flow pipe (720) to provide a space for a fluid flowing out of the side surface (722) of the gas flow pipe (720) after passing through the upper opening (723) to be guided toward the middle opening (725),
and/or optionally wherein the mixed gas flow pipe further includes a separator plate (729) dividing the upper and middle parts (722b) of the mixed gas flow pipe from each other.

4. The system of any one of the preceding claims, wherein each of the hydrogen gas supply lines (50, 51) and the nitrogen gas supply line (500) independently includes a flow regulating device.

5. The system of any one of the preceding claims, wherein each of the backflow prevention plates (30, 31) includes a plurality of openings (302), and
wherein each of the plurality of openings (302) included in each of the backflow prevention plates (30, 31) has a backflow prevention cap (303) selectively opened based on a flow direction of the gas, preferably wherein the backflow prevention cap (303) is coupled to a hinge (304) disposed at a position on each circumference part of the plurality of openings (302) included in each of the backflow prevention plates (30, 31),
optionally wherein a coupling part of the hinge (304), that is coupled to the hinge (304), includes a spring to apply an elastic force in a direction in which the backflow prevention cap (303) closes.

6. The system of any one of the preceding claims, further comprising at least two heat exchangers disposed downstream from each of the two or more catalyst beds (20, 21) to remove heat from effluents of the catalyst beds (20, 21) .

7. A method for synthesizing ammonia using the ammonia synthesis system according to any one of claims 1 to 6.

8. The method of claim 7, wherein ammonia is synthesized in the ammonia synthesis system at pressures ranging from 1 to 300 bar, and / or wherein ammonia is synthesized in the ammonia synthesis system at temperatures ranging from 200 to 700°C.

9. The method of claim 7 or 8, the method comprising the following modes selectively performed by the ammonia synthesis system:
a nitrogen gas purge mode in which nitrogen is supplied through the nitrogen gas supply line (500) and hydrogen is not supplied through any of the hydrogen gas supply lines (50, 51); and
an ammonia synthesis mode in which nitrogen is supplied through the nitrogen gas supply line (500) and hydrogen is supplied through at least one of the hydrogen gas supply lines (50, 51).

10. The method of claim 9, further comprising, in the ammonia synthesis mode, feeding the nitrogen and the hydrogen individually to the ammonia synthesis reactor (10).

11. The method of any one of claims 7 to 10, wherein feeding the nitrogen and the hydrogen individually to the ammonia synthesis reactor (10) comprises selectively controlling the feeding of the nitrogen and the hydrogen, and thereby accomdating changes in hydrogen flow rates to the ammonia synthesis reactor (10) due to variances in a renewable source of energy used to generate the hydrogen.

12. The method of claim 11, wherein, for hydrogen generated from the renewable energy source providing relatively low, medium, and high hydrogen flow rates,
at a hydrogen flow rate generated by the renewable energy source that is less than the medium hydrogen flow rate, supplying the hydrogen only through a lowest hydrogen gas supply line, of the hydrogen gas supply lines (50, 51), adjacent the lowest catalyst bed.

13. The method of claim 12, wherein, for hydrogen generated from a renewable energy source providing relatively low, medium, and high hydrogen flow rates,
at a hydrogen flow rate generated by the renewable energy source that is less than the high hydrogen flow rate and more than the low hydrogen flow rate, supplying the hydrogen through the hydrogen gas supply lines (50, 51) except for a highest hydrogen gas supply line, of the hydrogen gas supply lines (50, 51), adjacent a highest catalyst bed of the two or more catalyst beds (20, 21).

14. The method of any one of claims 7 to 13, wherein preheating at least one of the catalyst beds is carried out with the at least one microwave heating device, preferably wherein the preheating is carried out prior to the ammonia synthesis mode, more preferably wherein the preheating improves ammonia synthesis yield at a beginning of the ammonia synthesis mode.
